# EUROPÄISCHE PATENTSCHRIFT

(11) **EP 2 199 546 B1**
(45) Veröffentlichungstag und Bekanntmachung des Hinweises auf die Patenterteilung: **14.02.2018**
(21) Anmeldenummer: 09179204.4
(22) Anmeldetag: 15.12.2009
(51) Int. Cl.: F01D 21/04, F01D 25/24

(54) **Fangehäuse mit Berstschutz**
Fan casing with containment structure
Carter de soufflante avec structure de rétention

(30) Priorität: 17.12.2008 DE 102008062363
(43) Veröffentlichungstag der Anmeldung: 23.06.2010
(73) Patentinhaber: Rolls-Royce Deutschland Ltd & Co KG, 15827 Blankenfelde-Mahlow (DE)
(72) Erfinder: Lenk, Olaf, 12527 Berlin (DE)
(74) Vertreter: Maikowski & Ninnemann Patentanwälte Partnerschaft mbB

(56) Entgegenhaltungen:
- EP-A1- 1 589 195
- EP-A2- 1 918 531
- WO-A1-99/61757
- WO-A2-2008/156890
- US-B1- 6 979 172

## Beschreibung

Die Erfindung betrifft ein Fangehäuse für ein Strahltriebwerk.

Während der Entwicklung und Zertifizierung eines Strahltriebwerks müssen verschiedene Schadensfälle berücksichtigt werden. Zu diesen Schadensfällen gehört auch das Abtrennen einer Schaufel der Gebläsestufe (Fanschaufel). In diesen Schadensfällen sollen die abgetrennten Fanschaufeln das Strahltriebwerk nicht verlassen, damit das Fluggerät und die Passagiere nicht geschädigt werden. Dazu ist die kinetische Energie der abgetrennten Fanschaufeln von einem geeigneten Rückhaltesystem aufzunehmen (Berstschutz). Derzeit wird die Energie der abgetrennten Fanschaufeln durch verschiedene Konstruktionslösungen abgebaut.

Bei einer derzeitigen Konstruktionslösung besteht das Fangehäuse des Strahltriebwerks aus einem hochduktilen Material, welches sich beim Einschlag einer abgetrennten Fanschaufel plastisch verformt. Zumeist werden dabei hochduktile Stähle oder Titanlegierungen eingesetzt. In Abhängigkeit von dem gewählten Gehäusematerial, der Wandstärke und der Einschlagparameter wird durch die Plastifizierung des Fangehäuses unterschiedlich viel kinetische Energie abgebaut. Im Allgemeinen gilt, dass größere Gehäusewandstärken eine höhere Energie aufnehmen können.

Bei einer anderen derzeitigen Konstruktionslösung besteht das Fangehäuse aus einem Grundgerüst aus einem duktilen Material, welches sich beim Einschlag einer abgetrennten Fanschaufel plastisch verformt. Zusätzlich enthält das Fangehäuse ein kontinuierliches Umfangsband aus einem hochfesten und hochdehnbaren Material. Während das Grundgerüst des Fangehäuses aus Aluminium, Titan oder Stahl bestehen kann, wird für das Umfangsband zumeist eine Aramidfaser (z.B. Kevlar©) verwendet.

Bei einer weiteren derzeitigen Konstruktionslösung besteht das Fangehäuse aus einer hochfesten und hochsteifen Konstruktion, welches zu einem dezidierten Brechen der einschlagenden Fanschaufel führt. Diese kleineren Bruchstücke der Fanschaufel werden anschließend mit dem Luftstrom aus dem Triebwerk befördert.

Im Zuge der Gewichtsersparnis wird der Einsatz von Faserverbundmaterialien in Fangehäusen vorangetrieben. Aufgrund der hohen Steifigkeit von Faserverbundmaterialien eignen sich derartige Bauweisen hauptsächlich für die letztgenannte Konstruktionslösung.

Faserverbundmaterialien zeichnen sich durch eine hohe Festigkeit in Faserrichtung aus. Der Einschlag von Fanschaufeln geschieht allerdings senkrecht zu dieser Faserrichtung. Es ist daher davon auszugehen, dass ein beträchtlicher Teil der Struktur des Fangehäuses zerstört wird. Um den Zertifizierungsanforderungen zu genügen, muss demnach die Dicke des Fangehäuses erhöht werden, um einen sicheren Weiterflug zu gewährleisten. Dies erhöht die Masse des Fangehäuses deutlich und verringert die Wirtschaftlichkeit.

Die US 4,377,370 offenbart ein Fantriebwerk, das mit einem Ring im Innern des Fangehäuses ausgestattet ist. Dieser Ring umfasst eine starke elastische innere Begrenzung, einen ersten Ring, der aus Wicklungen eines Drahtes besteht, einen zweiten Ring, der aus einem deformierbaren Material besteht, und eine äußere Begrenzung. Diese Bauform erfordert jedoch einen hohen Aufwand bei der Herstellung.

Die DE 196 40 654 A1 beschreibt einen Berstschutz für Radialturbinen von Turboladern, der aus einem inneren umlaufenden Berstschutzring und einer äußeren spiralförmigen Blechhülle gebildet ist. Diese Konstruktion führt jedoch zu einem erhöhten Gewicht des Gehäuses.

Die DE 10 2006 041 321 A1 beschreibt ein Fangehäuse mit einem am Außen- oder Innenumfang angebrachten Metallringgeflecht. Das Metallringgeflecht mit geringem Gewicht kann sich jedoch im Falle sehr hoher auftretender Impaktorkräfte der abgetrennten Fanschaufeln als nicht ausreichend erweisen. Eine erhöhte Stärke des Metallringgeflechts dagegen würde zugleich eine Gewichtserhöhung nach sich ziehen. Außerdem ergibt sich ein hoher Herstellungsaufwand.

In der DE 41 19 85 A1 ist ein ballistisches Gewebe beschrieben, das an einem Fangehäuse angebracht ist. Das ballistische Gewebe ist aus synthetischen Fasern. Auch dieses Gewebe ist aufwendig herzustellen.

Die WO 2008/061759 A1 offenbart ein spezielles Geflecht, das in mindestens einer Raumrichtung schubstabil ist. Ein solches Geflecht kann ebenfalls als Berstschutz für Fangehäuse verwendet werden. Jedoch ist auch dieses Geflecht aufwendig herzustellen.

Die US 6 979 172 B1 beschreibt einen Berstschutz für ein Triebwerk mit einem Verbundmaterial umfassend eine Quarzfaserschicht.

Auch die WO 2008 / 156890 A2 beschreibt einen Berstschutz für ein Strahltriebwerk, der eine Quarz- oder Glasfaserschicht umfasst.

In der EP 1 589 195 A1 werden für den Berstschutz einer Gasturbine Kohlefaser- oder Glasfaserverbundwerkstoffe beschrieben. Auch ein Keramikbauteil kommt zum Einsatz.

Die EP 1 918 531 A2 betrifft einen Sicherungsring für eine Gasturbine, wobei eine keramische Abdeckung zum Einsatz kommt.

Die WO 99 / 61757 A1 betrifft eine Gasturbine mit einem Berstschutz aus Fasermaterial.

Der Erfindung liegt daher die Aufgabe zu Grunde, abgetrennte Fanschaufeln in einem Fangehäuse eines Strahltriebwerks mit einem Berstschutz abzufangen, der ein geringes Gewicht aufweist und einfach herzustellen ist.

Diese Aufgabe wird erfindungsgemäß mit einem Fangehäuse für ein Strahltriebwerk nach Anspruch 1 gelöst. Vorteilhafte Ausgestaltungen der Erfindung sind in den Unteransprüchen enthalten.

Erfindungsgemäß besteht die Lösung der Aufgabe in einem Fangehäuse für ein Strahltriebwerk, das einen Berstschutz umfasst, der mindestens im Bereich der Fanschaufeln aus Schichten aufgebaut ist. Das Fangehäuse ist aus einem Faserverbundmaterial gebildet, das selbst mindestens eine Schicht bildet, die mit mindestens einer anorganischen nichtmetallischen Schutzschicht versehen ist. Die mindestens eine Schutzschicht ist aus mindestens einem mineralischen Material gebildet, nämlich aus mindestens einer Steinfolie.

Um die Schutzwirkung eines Fangehäuses aus Faserverbundmaterial zu erhöhen, muss die Impaktorenergie der abgetrennten Fanschaufeln derart verteilt werden, dass sich eine möglichst gleichmäßige Lastverteilung einstellt. Des Weiteren muss das Einschneiden des Impaktors (abgetrennte Fanschaufel) in den Faserverbund verringert bzw. verhindert werden. Beides wird durch das Aufbringen einer anorganischen nichtmetallischen Schutzschicht an dem Fangehäuse erreicht.

Das Aufbringen der anorganischen nichtmetallischen Schutzschicht bewirkt außerdem, dass das Faserverbundmaterial dünner ausgeführt werden kann. Dadurch kann bei gesteigerter Schutzfunktionalität das Gewicht des Fangehäuses verringert werden.

Mineralische Materialien weisen eine hochfeste Oberfläche auf, die bewirkt, dass eine abgetrennte Fanschaufel beim Aufprall verformt wird und abprallt, so dass sie das Fangehäuse nicht durchschlagen kann. Außerdem weist die mineralische Schutzschicht eine geringe Dichte auf, die eine zusammen mit der Gewichtsverringerung aufgrund der Verwendung von Faserverbundmaterial eine Verringerung des Gesamtgewichts ermöglicht.

Steinfolie ist ein leicht erhältliches Material, das besonders gut dazu geeignet ist, eine mineralische Schutzschicht an einem Fangehäuse zu bilden. Die abrasiven Eigenschaften der Steinfolie bewirken eine gute Lauffläche für den normalen Betrieb, bei dem die Fanschaufeln am Fangehäuse entlang schleifen.

Die Schutzschicht kann an der Außenseite des Fangehäuses angebracht sein. Dies verhindert, dass eine abgetrennte Fanschaufel das Fangehäuse vollständig durchschlägt. Die Anzahl der beim Einschlag zerstörten Faserverbundlagen verringern sich signifikant. Daher kann das Fangehäuse mit weniger Faserverbundlagen ausgelegt werden, was sich positiv auf das Gesamtgewicht auswirkt.

Außerdem kann an der Innenseite des Fangehäuses eine Wabenstruktur vorhanden sein. Die Wabenstruktur dient dazu, einen Teil der Aufprallenergie der abgetrennten Fanschaufel abzufangen.

Alternativ kann die Schutzschicht an der Innenseite des Fangehäuses angebracht sein. Dadurch wird ein Eindringen einer abgetrennten Fanschaufel in das Faserverbundmaterial des Fangehäuses verhindert. Die abgetrennte Fanschaufel wird verformt ("aufgepilzt"), ohne das Faserverbundmaterial des Fangehäuses zu beschädigen. Daher kann das Fangehäuse mit weniger Lagen Faserverbundmaterial auskommen und somit das Gewicht des Fangehäuses verringert werden.

Vorzugsweise ist die Schutzschicht mittels mindestens eines Klebemittels an dem Faserverbundmaterial des Fangehäuses befestigt. Das Klebemittel gewährleistet eine feste Verbindung der Schutzschicht mit dem Faserverbundmaterial des Fangehäuses.

Alternativ ist die Schutzschicht mittels Ultraschalltechniken an dem Faserverbundmaterial des Fangehäuses befestigt. Dabei wird kein zusätzliches Klebematerial benötigt. Insbesondere das Ultraschallschweißen zeichnet sich durch geringe Schweißzeiten und hohe Wirtschaftlichkeit aus.

Weiterhin kann der Berstschutz eine duktile Schicht umfassen. Die duktile Schicht ist in der Lage, eventuell durchschlagende Impaktoren (abgetrennte Fanschaufeln) aufzufangen. Die duktile Schicht dient somit dazu, die Sicherheit gegen Versagen des Faserverbundmaterials weiter zu erhöhen.

Insbesondere weist die duktile Schicht mindestens eine Lage eines Geflechts aus metallischen Ringen auf, die in einem kontinuierlichen Band um das Faserverbundmaterial des Fangehäuses mit der Schutzschicht gewickelt ist. Ein solches Geflecht ist gut dazu geeignet, Impaktoren abzufangen, falls diese die Schutzschicht und das Faserverbundmaterial durchbrechen sollten.

Die metallischen Ringe des Geflechts können aus Aluminium, Titan, Stahl und/oder Legierungen dieser Metalle gebildet sein. Diese Metalle sind hochduktil und daher gut für das Geflecht geeignet.

Außerdem kann das Geflecht aus metallischen Ringen in eine Bettungsmasse eingelassen sein. Die Bettungsmasse bewirkt eine Formstabilität des Geflechts.

Schließlich kann an der Innenseite des Fangehäuses mindestens eine Schall absorbierende Auskleidung angebracht sein. Diese Auskleidung dämpft die Schallausbreitung beim Aufprall der Impaktoren auf den Berstschutz.

Im Folgenden wird ein Ausführungsbeispiel der Erfindung anhand von drei Figuren näher erläutert. Es zeigen:
- Fig. 1: eine perspektivische schematische Ansicht eines Segments eines Fans,
- Fig. 2: eine Schnittansicht eines Fangehäuses mit Berstschutz und
- Fig. 3: einen Teil eines Geflechts aus Ringen.

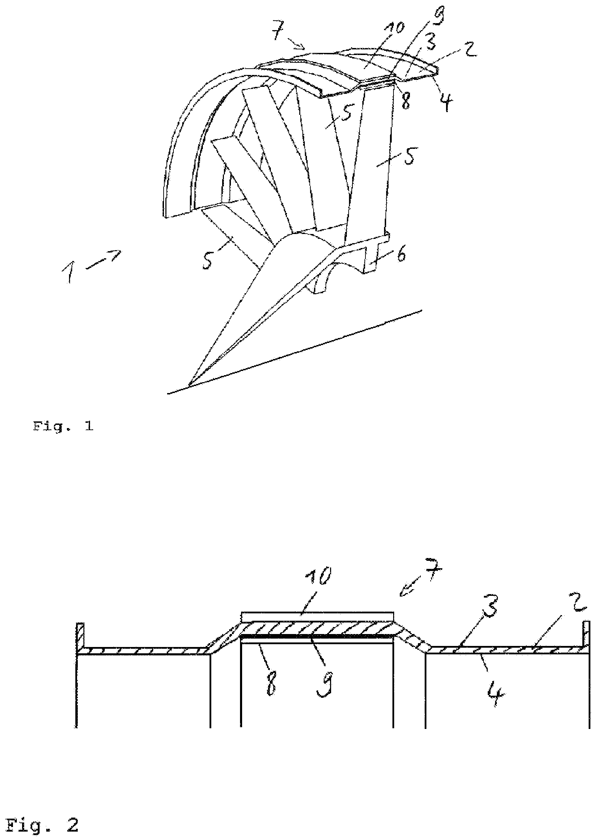

Fig. 1 zeigt eine perspektivische schematische Ansicht eines Fans 1 für ein nicht dargestelltes Strahltriebwerk. Der Fan 1 umfasst ein Fangehäuse 2, Fanschaufeln 5, eine Fanscheibe 6 und einen Berstschutz 7.

Der Fan 1 ist rotationssymmetrisch aufgebaut. Im Zentrum des Fans 1 befindet sich die Fanscheibe 6, an der die Fanschaufeln 5 radial angebracht sind. Das Fangehäuse 2 ist im Wesentlichen zylindrisch ausgebildet und ragt in axialer Richtung über die Fanschaufeln 5 hinaus. Der Berstschutz 7 ist im Bereich der Fanschaufeln 5 angeordnet.

In Fig. 2 ist eine Schnittansicht des Fangehäuses 2 mit dem Berstschutz 7 vergrößert dargestellt.

Das Fangehäuse 2 in den Fig. 1 und 2 weist eine Außenseite 3 und eine Innenseite 4 auf. Der Berstschutz 7 umfasst eine Schutzschicht 8, ein Klebemittel 9 und eine duktile Schicht 10.

Die Schutzschicht 8 ist mittels des Klebemittels 9 an der Innenseite 4 des Fangehäuses 2 befestigt. Die duktile Schicht 10 ist an der Außenseite 3 des Fangehäuses 2 angebracht.

Das Fangehäuse 2 ist aus einem Faserverbundmaterial hergestellt. Das Faserverbundmaterial umfasst kontinuierliche Kohlefasern oder Glasfasern oder eine Mischform aus beiden Faserarten (Mischungsanteile von 0% bis 100%). Der Faservolumenanteil liegt zwischen 40% und 80%. Die Faserorientierung und der Faserlagenaufbau im Fangehäuse können beliebig variiert werden. Als Herstellungsmethoden kommen die Wickeltechnologie, das Harzinjektionsverfahren, Handlaminierungen und Autoklavverfahren in Frage. Die möglichen Herstellungsverfahren sind jedoch nicht auf die genannten Verfahren beschränkt.

Die Schutzschicht 8 ist aus einem mineralischen Material, z.B. Steinfolie aus Granit oder einem anderen Gestein oder aus einer mineralischen Beschichtung, gebildet. Die typische Dicke der Schutzschicht 8 reicht von 0,2 mm bis 5,0 mm. Davon abweichende Dicken sind ebenfalls möglich. Die Schutzschicht 8 wird bei der Herstellung flächig mit dem Faserverbundmaterial des Fangehäuses 2 verbunden, z.B. mit Hilfe des Klebemittels 9.

Die duktile Schicht 10 ist aus einem Geflecht 11 aus metallischen Ringen 12 gebildet, die in eine Bettungsmasse aus beliebigem Material eingelassen sein können. Das Geflecht 11 ist in einer oder mehreren Lagen um das Fangehäuse 2 gewickelt.

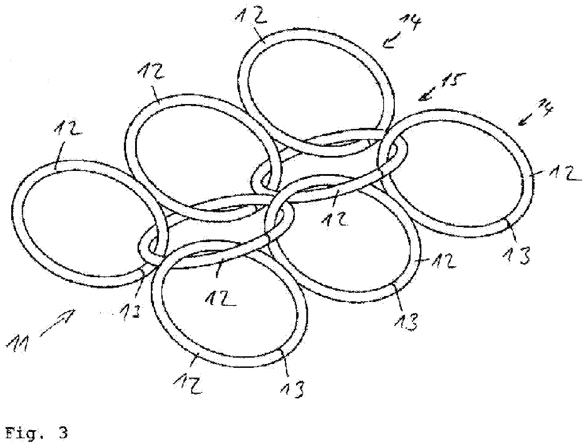

In Fig. 3 ist das Geflecht 11 aus metallischen Ringen 12 im Detail dargestellt. Die metallischen Ringe 12 sind in parallelen Reihen 14 und 15 angeordnet, wobei die Reihen 14 an beiden Seiten der Reihe 15 angeordnet sind. Die Ringe 12 der Reihen 14 greifen in die Ringe 12 der Reihe 15 ein. Das Geflecht 11 wird hergestellt, indem die zunächst offenen Ringe 12 ineinander geschoben werden und anschließend an den Schweißnähten 13 geschlossen werden. Die Größe der Ringe 12 ist hinsichtlich der Ringdurchmesser und der Ringdrahtstärke nicht beschränkt. Die Ringform kann ebenfalls beliebig gewählt werden.

Im Betrieb können Fremdkörper in den Fan 1 eintreten und auf die Fanschaufeln 5 aufschlagen. Dabei können sich ganze Fanschaufeln 5 oder Teile von diesen lösen. Diese werden durch die Rotationsenergie in radialer Richtung nach außen geschleudert und bilden Impaktoren. Die Impaktoren schlagen mit hoher Energie auf den Berstschutz 7 auf.

Die Schutzschicht 8 bewirkt, dass die Impaktoren aufgepilzt werden, d.h. diese werden derart verformt, dass sie in dem Bereich, in dem die Impaktoren auf die Schutzschicht 8 auftreffen, gestaucht werden. Die Schutzschicht 8 dient somit der Energieaufnahme in der direkten Einschlagzone der Fanschaufeln 5.

Dadurch wird das Faserverbundmaterial des Fangehäuses 2 geschont, das das Grundgerüst und damit den Lastpfad unter allen Einsatzbedingungen darstellt. Die Impaktoren bleiben im Innern des Fangehäuses 2 und werden mit der nicht dargestellten Luftströmung in Strömungsrichtung abtransportiert. Falls ein Impaktor die Schutzschicht 8 und das Faserverbundmaterial des Fangehäuses 2 dennoch durchschlagen sollte, fängt die duktile Schicht 10 als Durchbruchschutz die Impaktoren auf.

### Bezugszeichenliste

- 1: Fan
- 2: Fangehäuse
- 3: Außenseite
- 4: Innenseite
- 5: Fanschaufel
- 6: Fanscheibe
- 7: Berstschutz
- 8: Schutzschicht
- 9: Klebemittel
- 10: Duktile Schicht
- 11: Geflecht
- 12: Ring
- 13: Schweißnaht
- 14: Reihe
- 15: Reihe

## Patentansprüche

1. Fangehäuse (2) für ein Strahltriebwerk, das einen Berstschutz (7) umfasst, der mindestens im Bereich der Fanschaufeln (5) aus Schichten aufgebaut ist, wobei das Fangehäuse (2) aus einem Faserverbundmaterial gebildet ist, das selbst mindestens eine Schicht bildet, die mit mindestens einer anorganischen nichtmetallischen Schutzschicht (8) versehen ist, wobei die mindestens eine Schutzschicht (8) aus mindestens einem mineralischen Material gebildet ist,
**dadurch gekennzeichnet, dass**
die mindestens eine Schutzschicht (8) aus mindestens einer Steinfolie gebildet ist.

2. Fangehäuse (2) nach Anspruch 1, **dadurch gekennzeichnet, dass** die mindestens eine Schutzschicht (8) an der Außenseite (3) des Fangehäuses (8) angebracht ist.

3. Fangehäuse (2) nach Anspruch 2, **dadurch gekennzeichnet, dass** an der Innenseite (4) des Fangehäuses (2) eine Wabenstruktur vorhanden ist.

4. Fangehäuse (2) nach Anspruch 1, **dadurch gekennzeichnet, dass** die mindestens eine Schutzschicht (8) an der Innenseite (4) des Fangehäuses (2) angebracht ist.

5. Fangehäuse (2) nach einem der Ansprüche 1 bis 4, **dadurch gekennzeichnet, dass** die mindestens eine Schutzschicht (8) mittels mindestens eines Klebemittels (9) an dem Faserverbundmaterial des Fangehäuses (2) befestigt ist.

6. Fangehäuse (2) nach einem der Ansprüche 1 bis 4, **dadurch gekennzeichnet, dass** die mindestens eine Schutzschicht (8) mittels Ultraschalltechniken an dem Faserverbundmaterial des Fangehäuses (2) befestigt ist.

7. Fangehäuse (2) nach einem der Ansprüche 1 bis 6, **dadurch gekennzeichnet, dass** der Berstschutz (7) eine duktile Schicht (10) umfasst.

8. Fangehäuse (2) nach Anspruch 7, **dadurch gekennzeichnet, dass** die duktile Schicht (10) mindestens eine Lage eines Geflechts (11) aus metallischen Ringen (12) aufweist, die in einem kontinuierlichen Band um das Faserverbundmaterial des Fangehäuses (2) mit der mindestens einen Schutzschicht (8) gewickelt ist.

9. Fangehäuse (2) nach Anspruch 8, **dadurch gekennzeichnet, dass** die metallischen Ringe (12) des Geflechts (11) aus Aluminium, Titan, Stahl und/oder Legierungen dieser Metalle gebildet sind.

10. Fangehäuse (2) nach Anspruch 8 oder 9, **dadurch gekennzeichnet, dass** das Geflecht (11) aus metallischen Ringen (12) in eine Bettungsmasse eingelassen ist.

11. Fangehäuse (2) nach einem der vorhergehenden Ansprüche, **dadurch gekennzeichnet, dass** an der Innenseite (4) des Fangehäuses (2) mindestens eine Schall absorbierende Auskleidung angebracht ist.

## Claims

1. Fan casing (2) for a jet engine which has a burst protection arrangement (7) made up of layers at least in the area of the fan blades (5), where the fan casing (2) is made of a fiber-composite material which itself forms at least one layer provided with at least one inorganic, non-metallic protective layer (8), where the at least one protective layer (8) is made of at least one mineral material,
**characterized in that**
the at least one protective layer (8) is formed by at least one stone foil.

2. Fan casing (2) in accordance with Claim 1, **characterized in that** the at least one protective layer (8) is provided on the outer side (3) of the fan casing (2).

3. Fan casing (2) in accordance with Claim 2, **characterized in that** a honeycomb structure is provided on the inner side (4) of the fan casing (2).

4. Fan casing (2) in accordance with Claim 1, **characterized in that** the at least one protective layer (8) is provided on the inner side (4) of the fan casing (2).

5. Fan casing (2) in accordance with one of the Claims 1 to 4, **characterized in that** the at least one protective layer (8) is attached to the fiber-composite material of the fan casing (2) by means of at least one adhesive (9).

6. Fan casing (2) in accordance with one of the Claims 1 to 4, **characterized in that** the at least one protective layer (8) is attached to the fiber-composite material of the fan casing (2) by means of ultrasonic techniques.

7. Fan casing (2) in accordance with one of the Claims 1 to 6, **characterized in that** the burst protection arrangement (7) includes a ductile layer (10).

8. Fan casing (2) in accordance with Claim 7, **characterized in that** the ductile layer (10) has at least one layer of a mesh (11) of metallic rings (12) wound in a continuous strip around the fiber-composite material of the fan casing (2) with the at least one protective layer (8).

9. Fan casing (2) in accordance with Claim 8, **characterized in that** the metallic rings (12) of the mesh (11) are made of aluminum, titanium, steel and/ or alloys of these metals.

10. Fan casing (2) in accordance with Claim 8 or 9, **characterized in that** the mesh (11) of metallic rings (12) is incorporated in a bedding substance.

11. Fan casing (2) in accordance with one of the preceding Claims, **characterized in that** at least one sound-absorbing lining is provided on the inner side (4) of the fan casing (2).

## Revendications

1. Carter de ventilateur (2) pour un réacteur qui comprend une protection anti-éclatement (7) qui est constituée de couches au moins dans la zone des pales du ventilateur (5), sachant que le carter de ventilateur (2) est constitué d'un matériau composite en fibres formant lui-même au moins une couche qui est pourvue d'au moins une couche protectrice (8) inorganique non-métallique, sachant que ladite au moins une couche protectrice (8) est constituée d'au moins un matériau minéral,
**caractérisé en ce que**
ladite au moins une couche protectrice (8) est constituée d'au moins une feuille de pierre.

2. Carter de ventilateur (2) selon la revendication n° 1, **caractérisé en ce que** ladite au moins une couche protectrice (8) est appliquée sur la face extérieure (3) du carter de ventilateur (2).

3. Carter de ventilateur (2) selon la revendication n° 2, **caractérisé en ce qu'une** structure en nid d'abeilles est présente sur la face intérieure (4) du carter de ventilateur (2).

4. Carter de ventilateur (2) selon la revendication n° 1, **caractérisé en ce que** ladite au moins une couche protectrice (8) est appliquée sur la face intérieure (4) du carter de ventilateur (2).

5. Carter de ventilateur (2) selon une des revendications n° 1 à n° 4, **caractérisé en ce que** ladite au moins une couche protectrice (8) est fixée sur le matériau composite en fibres du carter de ventilateur (2) au moyen d'au moins un adhésif (9).

6. Carter de ventilateur (2) selon une des revendications n° 1 à n° 4, **caractérisé en ce que** ladite au moins une couche protectrice (8) est fixée sur le matériau composite en fibres du carter de ventilateur (2) au moyen de techniques ultrasonores.

7. Carter de ventilateur (2) selon une des revendications n° 1 à n° 6, **caractérisé en ce que** la protection anti-éclatement (7) comprend une couche ductile (10).

8. Carter de ventilateur (2) selon la revendication n° 7, **caractérisé en ce que** la couche ductile (10) présente au moins une couche d'un maillage (11) d'anneaux métalliques (12) qui est enroulée dans une bande continue autour du matériau composite en fibres du carter de ventilateur (2) avec ladite au moins une couche protectrice (8).

9. Carter de ventilateur (2) selon la revendication n° 8, **caractérisé en ce que** les anneaux métalliques (12) du maillage (11) sont constitués d'aluminium, de titane, d'acier et/ ou d'alliages de ces métaux.

10. Carter de ventilateur (2) selon la revendication n° 8 ou n° 9, **caractérisé en ce que** le maillage (11) formé par les anneaux métalliques (12) est incorporé dans une masse d'enrobage.

11. Carter de ventilateur (2) selon une des revendications précédentes, **caractérisé en ce qu'au** moins un revêtement insonorisant est pourvu sur la face intérieure (4) du carter de ventilateur (2).
